# EUROPEAN PATENT APPLICATION

(11) **EP 0 556 763 A2**
(43) Date of publication of application: **25.08.1993**
(21) Application number: 93102354.3
(22) Date of filing: 15.02.1993
(51) Int. Cl.: H04B 1/50, H04B 1/56

(54) **Wireless installation**

(30) Priority: 15.02.1992 JP 28647/92
(71) Applicant: MITSUBISHI DENKI KABUSHIKI KAISHA, Tokyo 100 (JP)
(72) Inventor: Kamitani, Toshiki, c/o Mitsubishi Denki K.K., 8-chome, Amagasaki-shi, Hyogo 661 (JP)
(74) Representative: Sajda, Wolf E., Dipl.-Phys.

(57) **Abstract**

A transceiver is provided with a frequency synthesizer (1) and a controller (10) for dividing the signal output of the frequency synthesizer (1) to a transmitting part (20) and a receiving part (30) for performing a time division multiple access operation.

The transceiver provides a transmission local oscillation frequency and a reception local oscillation frequency from the frequency synthesizer (1) and allocates its output to the transmitting part (20) when the transmitting system operates and to the receiving part (30) when the receiving system operates.

## Description

### BACKGROUND OF THE INVENTION

### Field of the Invention

The present invention relates to a wireless installation mounting a synthesizer.

### DESCRIPTION OF THE PRIOR ART

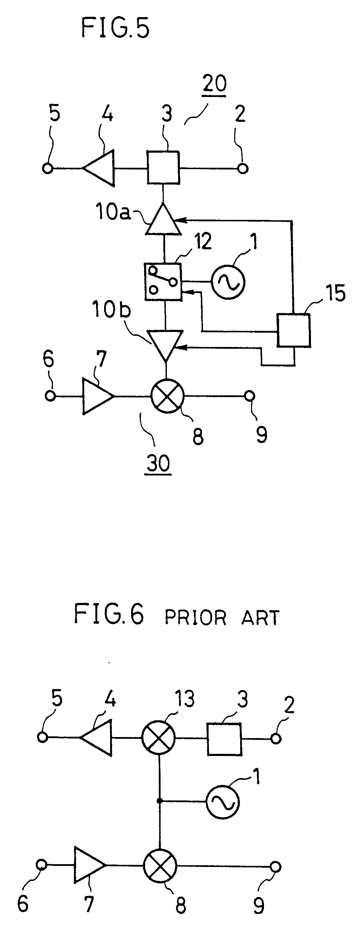

Fig. 6 is a block diagram of the high-frequency section of an existing wireless installation. In Fig. 6, numeral 1 is a frequency synthesizer, 2 is a base band signal input terminal, 3 is a modulator, 13 is a mixer for converting the output of the modulator 3 into a transmission frequency by the frequency synthesizer 1, 4 is an amplifier for amplifying the mixer output of the modulator 3, 5 is a transmitter output terminal, 6 is a receiver input terminal, 7 is a top amplifier, 8 is a mixer for conversion from the output of the frequency synthesizer 1 and the top amplifier output into intermediate frequencies, and 9 is an intermediate frequency output terminal.

The following is a description of operation. At the transmitting side, the base band signal input from the base band signal input terminal 2 is modulated to a transmission intermediate frequency with the modulator 3. The modulated transmission intermediate frequency is converted into a transmission frequency by the output of the frequency synthesizer 1 in the mixer 13. It is amplified by the amplifier 4 before it is transmitted from the transmitter output terminal 5.

At the receiving side, the wave input from the receiver input terminal 6 is amplified by the top amplifier 7 before it is converted into a reception intermediate frequency signal by the output of the frequency synthesizer 1 in the mixer 8. It is output from the intermediate frequency output terminal 9.

With the known wireless installation as described above, the operation at the transmitting side and the operation at the receiving side are simultaneously performed and the output frequency of the frequency synthesizer 1 is the same at the transmitting and receiving sides. There is a problem in selecting a transmission intermediate frequency and reception intermediate frequency because they must be selected so that frequencies in the wireless installation do not interfere with each other due to harmonic or cross modulation.

The object of the present invention is to overcome the above problem and to provide a type of wireless installation for performing both transmission and reception, which is known as the time division multiple access.

### SUMMARY OF THE INVENTION

The wireless installation of the present invention is provided with a frequency synthesizer and a controller for dividing the signal output of the frequency synthesizer for signal supply to at least one set consisting of a transmitting system and a receiving system.

The wireless installation of the present invention provides a transmission local oscillation frequency and a reception local oscillation frequency from a frequency synthesizer and allocates the frequency synthesizer output to a transmitting system when the transmitting system operates and to a receiving system when the receiving system operates.

The above and other objects, features, and advantages of the invention will become more apparent from the following description when taken in conjunction with the accompanying drawings.

### BRIEF DESCRIPTION OF THE DRAWINGS

- Fig. 1: is a block diagram of the wireless installation of Embodiment 1 of the present invention;
- Fig. 2: is a diagram showing the details of the wireless installation of Embodiment 1;
- Fig. 3: is a block diagram of the wireless installation of Embodiment 2 of the present invention;
- Fig. 4: is a block diagram of the wireless installation of Embodiment 3 of the present invention;
- Fig. 5: is a block diagram of the wireless installation of Embodiment 4 of the present invention; and
- Fig. 6: is a block diagram of a known wireless installation.

### DESCRIPTION OF THE PREFERRED EMBODIMENTS

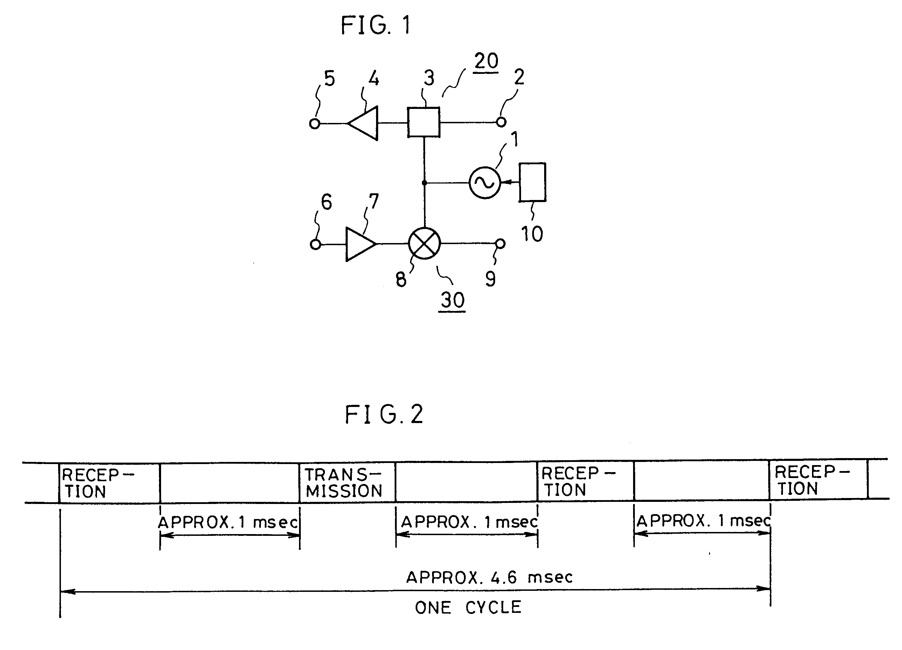

Embodiment 1 of the present invention is described below by referring to the drawing. Fig. 1 is a block diagram of the wireless installation of Embodiment 1 of the present invention. Components which are same as those in Fig. 6 are provided with the same numerals. In Fig. 1, numeral 1 is a frequency synthesizer which comprises a voltage control oscillator (VCO) for covering the bands of a transmission local oscillator and a reception local oscillator. A transmitting system 20 comprises the base band signal input terminal 2, modulator 3, amplifier 4, and transmitter output terminal 5. A receiving system 30 comprises the receiver input terminal 6, top amplifier 7, mixer 8, and intermediate frequency output terminal 9. Numeral 10 is a controller which selects a different output frequency of the frequency synthesizer for transmission and reception, respectively.

The following is a description of operation. For a wireless installation used in TDMA communication, transmission and reception are not simultaneously performed. Therefore, time slots for communication have a time lag between transmission and reception. Fig. 2 shows this situation. As shown in Fig. 2, the operation timing of the receiving system differs from that of the transmitting system by approx. 1 ms. Two times of the receiving operation and one time of the transmitting operation make one cycle with the length of approx. 4,6 ms. In this embodiment, the controller sets the frequency of the transmitting local oscillator with the frequency synthesizer 1 and changes the oscillation frequency of the frequency synthesizer 1 for reception in order to use the frequency synthesizer 1 by means of time division as a receiving local oscillator. Concretely, the frequency changes from 864,2 MHz to 890,2 MHz when control shifts from the receiving first channel to the transmitting first channel. The controller 10 controls the timing of frequency change by using a timer.

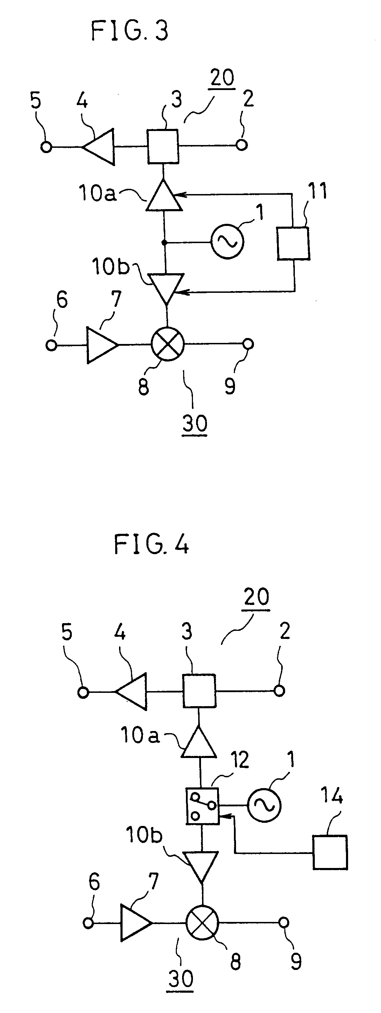

Fig. 3 is a block diagram of the wireless installation of Embodiment 2 of the present invention. A buffer amplifier 10a serving as a first amplifier is connected between a frequency synthesizer 1 and a modulator 3. Similarly a buffer amplifier 10b serving as a second amplifier is connected between the frequency synthesizer 1 and a mixer 8. The buffer amplifiers 10a and 10b are controlled by a controller 11. Only the buffer amplifier 10a is operated for transmission and only the buffer amplifier 10b is operated for reception. Thereby, the isolation between the transmitting system 20 and the receiving system 30 is obtained. A transmission local oscillation frequency is input to the mixer 8 of the receiving system 30 during reception to prevent interference, similar to the case of Embodiment 1.

Fig. 4 is a block diagram of the wireless installation of Embodiment 3 of the present invention. For the wireless installation in Fig. 4, unlike Embodiment 2, a changeover switch 12 is connected between a frequency synthesizer 1 and buffer amplifiers 10a and 10b and controlled by a controller 14.

The wireless installation in Fig. 4 is controlled by the controller 14 so that the output of the frequency synthesizer 1 is connected to the transmitting system 20 for transmission and to the receiving system 30 for reception. Thereby, the isolation between the transmitting system 20 and the receiving system 30 is obtained because of the isolation provided by the switch 12.

Fig. 5 is a block diagram of the wireless installation of Embodiment 4 of the present invention. In the wireless installation in Fig. 5, a buffer amplifier 10a is connected between a frequency synthesizer 1 and a modulator 3 and a buffer amplifier 10b is connected between the frequency synthesizer 1 and a mixer 8. In addition a changeover switch 12 is connected between the frequency synthesizer 1 and the buffer amplifiers 10a and 10b. The changeover switch 12 and the buffer amplifiers 10a and 10b are controlled by the controller 15.

The controller of the wireless installation in Fig. 5 sets the frequency synthesizer 1 to the transmitting system 20 for transmission with the changeover switch 12 and also operates the buffer amplifier 10a. It also sets the frequency synthesizer 1 to the receiving system 30 for reception with the changeover switch 12 and operates the buffer amplifier 10b. The isolation of the transmitting system 20 from the receiving system 30 results from the sum of the isolation capabilities of the switch 12 and buffer amplifiers 10a and 10b to provide greater isolation.

The present invention is described on embodiments comprising a set consisting of a transmitting system and a receiving system. However, the present invention is not restricted to such embodiments, but it can be applied to arrangements comprising a plurality of sets of transmitting system and receiving system.

As described above, for the present invention, a frequency synthesizer and a controller for dividing the signal output of the frequency synthesizer are used for at least one set of transmitting system and receiving system. Therefore, it is possible to eliminate one frequency synthesizer because the transmission local frequency is provided by one frequency synthesizer. Thus, the present invention makes it possible to provide a compact and energy-saving wireless installation.

## Claims

1. A wireless installation comprising at least one set consisting of a transmitting system (20) and a receiving system (30) which are not simultaneously operated, wherein each set of transmitting and receiving systems is provided with a frequency synthesizer (1) and a controller (10) for dividing the output of the frequency synthesizer.

2. A time-division wireless installation having a frequency synthesizer (1) and a modulator (3) for modulating a transmission intermediate frequency by a base band signal sent from a base band signal input terminal (2) and comprising a transmitting system (20) for converting the output of the modulator (3) into a transmission frequency by the output of the frequency synthesizer (1) and for outputting the transmission frequency and a receiving system (30) for converting a receiving wave sent from a receiver input terminal (6) into a receiving intermediate frequency signal by the output of the frequency synthesizer (1),
wherein the transmitting and receiving systems are operated at different timing
and wherein a controller (10, 11) is provided which uses a different oscillation frequency of the frequency synthesizer (1) for transmission and reception, respectively.

3. A time-division wireless installation having a frequency synthesizer (1) and a modulator (3) for modulating a transmission intermediate frequency by a base band signal sent from a base band signal input terminal (2) and comprising a transmitting system (20) for converting the output of the modulator into a transmission frequency by the output of the frequency synthesizer (1) and for outputting the transmission frequency and a receiving system (30) for converting a receiving wave sent from a receiver input terminal (6) into a reception intermediate frequency signal by the output of the frequency synthesizer (1),
wherein the transmitting and receiving systems are operated at different timing
and wherein a first amplifier (10a) is connected between the frequency synthesizer (1) and the transmitting system (20), a second amplifier (10b) is connected between the frequency synthesizer (1) and the receiving system (30) and a controller (11) is included which operates the first amplifier (10a) for transmission and the second amplifier (10b) for reception.

4. A time-division wireless installation having a frequency synthesizer (1) and a modulator (3) for modulating a transmission intermediate frequency by a base band signal sent from a base band signal input terminal (2) and comprising a transmitting system (20) for converting the output of the modulator (3) into a transmission frequency by the output of the frequency synthesizer (1) and for outputting the transmission frequency and a receiving system (30) for converting a receiving wave sent from a receiver input terminal (6) into a reception intermediate frequency signal by the output of the frequency synthesizer (1),
wherein the transmitting and receiving systems operate at different timing
and wherein a changeover switch (12) is connected between the frequency synthesizer (1) and the transmitting and receiving systems (20, 30) and a controller (14) is included which sets the changeover switch (12) to the transmitting side or the receiving side.

5. A time-division wireless installation having a frequency synthesizer (1) and a modulator (3) for modulating a transmission intermediate frequency by a base band signal sent from a base band signal input terminal (2) and comprising a transmitting system (20) for converting the output of the modulator into a transmission frequency by the output of the frequency synthesizer (1) and for outputting the transmission frequency and a receiving system (30) for converting a receiving wave sent from a receiver input terminal (6) into a reception intermediate frequency signal by the output of the frequency synthesizer (1),
wherein the transmitting and receiving systems operate at different timing
and wherein a first amplifier (10a) is connected between the frequency synthesizer (1) and the transmitting system (20), a second amplifier (10b) is connected between the frequency synthesizer (1) and the receiving system (30), a changeover switch (12) is connected between the frequency synthesizer (1) and the transmitting and receiving systems (20, 30), and a controller (15) is provided which sets the changeover switch (12) to the transmitting side for transmission and also operates the first amplifier (10a) and sets the changeover switch (12) to the receiving side for reception.
